# EUROPEAN PATENT SPECIFICATION

(11) **EP 1 123 010 B1**
(45) Date of publication and mention of the grant of the patent: **16.04.2003**
(21) Application number: 99949155.8
(22) Date of filing: 13.10.1999
(51) Int. Cl.: A23G 9/28

(54) **A DISPENSER FOR DISPENSING FROZEN DESSERT FROM PRE-FILLED CONTAINERS, AND A DISPENSING SYSTEM INCLUDING A DISPENSER AND A PLURALITY OF CONTAINERS**
ABGABEVORRICHTUNG FÜR ABGABE VON GEFRORENEN SÜSSSPEISEN AUS VORGEFÜLLTEN BEHÄLTERN, UND EIN ABGABESYTEM MIT EINER ABGABEVORRICHTUNG UND MEHREREN BEHÄLTER
DISTRIBUTEUR DE DESSERTS GLACES A PARTIR DE RECIPIENTS PREREMPLIS, ET SYSTEME DE DISTRIBUTION COMPORTANT LE DISTRIBUTEUR ET PLUSIEURS RECIPIENTS

(30) Priority: 20.10.1998 CA 2251065; 22.07.1999 GB 9917164
(43) Date of publication of application: 16.08.2001
(73) Proprietor: Ezee Whip Dispensing Systems Limited, Milton Keynes, MK9 2AF (GB)
(72) Inventor: Wells, Michael Andrew, Cosgrove, Milton Keynes MK19 7DL (GB)
(74) Representative: Raynor, Simon Mark
(86) International application number: GB9903215
(87) International publication number: WO00022936

(56) References cited:
- WO-A-94/13154
- WO-A-96/01224
- US-A- 2 218 598
- US-A- 5 020 698
- US-A- 5 820 892

## Description

The present invention relates to a dispenser for dispensing frozen dessert from pre-filled containers into for example a serving dish or wafer cornet. Furthermore the present inventionrelates to a dispensing system for dispensing frozen desserts, including a dispenser and a plurality of containers, each containing an individual portion of the frozen dessert. In particular, but not exclusively, the invention relates to an ice-cream dispensing system for use in the home or in shops or other establishments that dispense ice-creams.

Individual portions of ice-cream may be dispensed from tubs using scoops. This method of dispensing ice-cream is slow and time consuming, and there is no control of size of the individual portions. Unless the ice-cream is allowed to soften first, the ice-cream in tubs is often hard, resulting in it being difficult to scoop out ofthe tub. When the hard ice-cream is then forced into a wafer cone, the cone may break: alternatively, if the ice-cream is not firmly secured within the cone, it may fall out.

Uniform individual portions of ice-cream may also be dispensed using an ice-cream dispenser, for example as described in WO94/13154. However, these ice-cream dispensers are expensive, large and bulky. They cannot easily be stored and often cannot be manually operated

US 5,020,698 describes an ice cream ejector. Ice cream is mixed with solid ingredients in a cup, which is then placed on a sliding support shelf A piston is received in the cup and is pressed downwards with a hand lever, pressing ice cream from the cup outlet into a handheld cone.

It is an object of the present invention to provide a dispenser for dispensing frozen desserts from pre-filled containers, and a dispensing system including a dispenser and a plurality of containers pre-filled with frozen dessert that mitigates at least some of the above mentioned problems.

According to the present invention there is provided a dispensing device for dispensing frozen dessert from pre-filled containers of frozen dessert, each said container including a tubular housing having a nozzle at a first end thereof and a piston located for sliding movement within said tubular housing to extrude frozen dessert within said container through the nozzle, the dispensing device including a frame member, a support means for supporting a pre-filled container in position for dispensing the frozen dessert, said support means being attached to said frame member by a first pivot means, a plunger for engaging the piston of a container supported on said support means, and a drive lever for driving said plunger to dispense frozen dessert from the container, said plunger being attached to said drive lever by a second pivot means, said drive lever being attached to said frame member by a third pivot means, the arrangement being such that the dispensing device may be unfolded for use or folded substantially flat for storage.

The dispensing device is small, compact and easy to use, allowing individual portions of frozen dessert to be dispensed easily and attractively into either a cornet or a bowl. The dispensing device can be folded flat so that when it is not in use it can be easily stowed away, for example in a drawer.

Preferably, the support member is arranged to fold into an aperture in the frame member, and includes an arcuate support surface to engage the first end of the container.

Preferably, the drive lever is arranged to fold substantially flat against the frame member. Advantageously, the plunger is arranged to fold into an aperture in the drive lever.

Advantageously, the drive lever has two parts pivoted together, the arrangement being such that the drive lever may be unfolded for use or folded substantially flat for storage.

Advantageously, the frame member includes mounting means for mounting the device to a support.

The present invention further provides for a frozen dessert dispensing system, said dispensing system including a dispensing device as described in the preceding paragraphs and a plurality of containers, each container containing an individual portion of frozen dessert, said container including a substantially cylindrical tube having first and second ends, a nozzle means towards said first end, a piston means located between said nozzle and said second end, said piston means being adapted for sliding movement along the tube between said nozzle means and said nozzle means.

The dispensing system is small, compact and easy to use, allowing individual portions of frozen dessert to be dispensed easily and attractively into either a cornet or a bowl. This system provides for a choice offlavours, quantity control of portion size, improved hygiene.

Advantageously, the individual portion of frozen dessert lies in the range 100ml-250ml, and preferably in the range 125ml-200ml.

Advantageously, the container is sealed with a removable cover. Preferably, the container is substantially rigid, and made of high density polyethylene or polypropylene.

The present invention further provides for a method of dispensing frozen dessert from a container containing an individual portion of frozen dessert using a dispensing device as described in the preceding paragraphs, said container including a substantially cylindrical tube having first and second ends, a nozzle means towards said first end, a piston means located between said nozzle and said second end, said piston means being adapted for sliding movement along the tube , said individual portion of frozen dessert being contained within the cylindrical tube between said nozzle means and said piston means, the method including unfolding the dispensing device for use, placing a container of frozen dessert on said support means, placing the plunger in engagement in engagement with the piston of the container, and operating said drive lever to actuate said plunger, such that it drives said piston along the tube, and dispenses the frozen dessert through said nozzle into a serving container.

An embodiment of the invention will now be described. by way of example, with reference to the accompanying drawings of which:
Figure 1 is a front view of the folded dispenser;
Figure 2 is a rear view of the folded dispenser;
Figure 3 is a side view of the folded dispenser;
Figure 4 is a perspective view of the dispenser as it is unfolded;
Figure 5 is a side view, in cross-section of the dispenser in the operating position, with a container in position;
Figure 6 is a perspective view of a container.

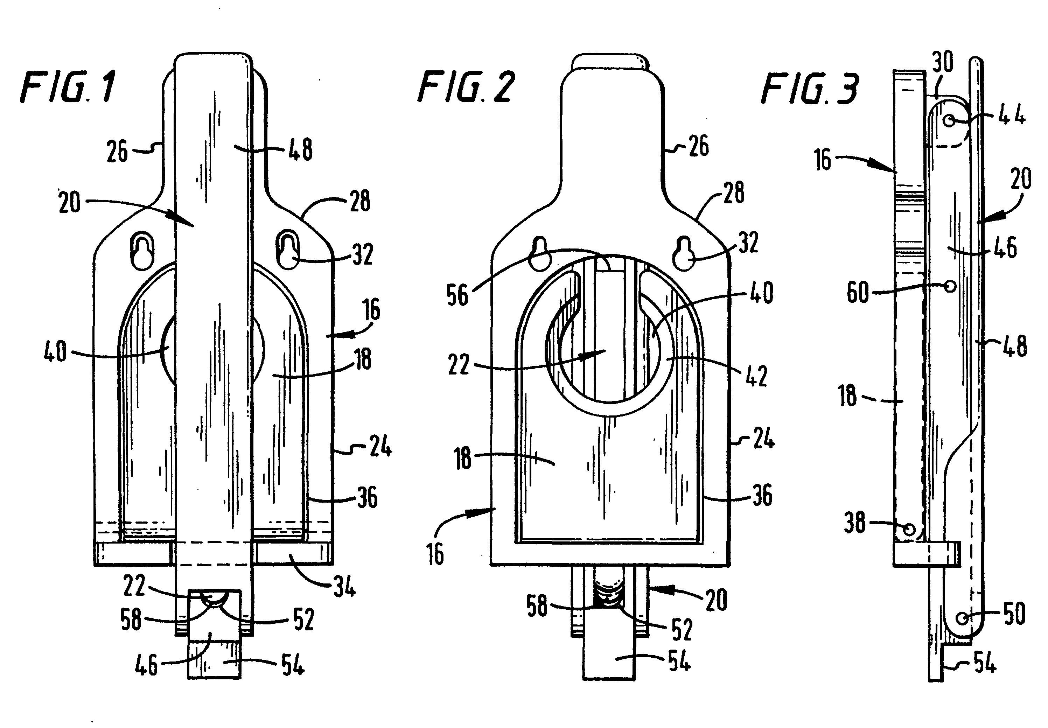

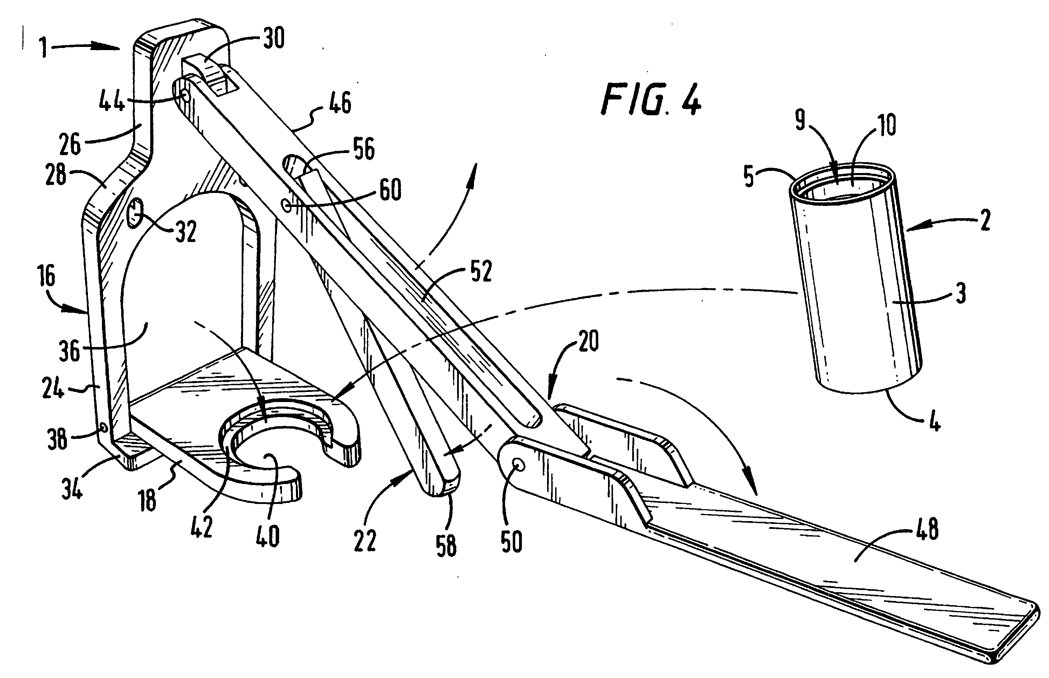

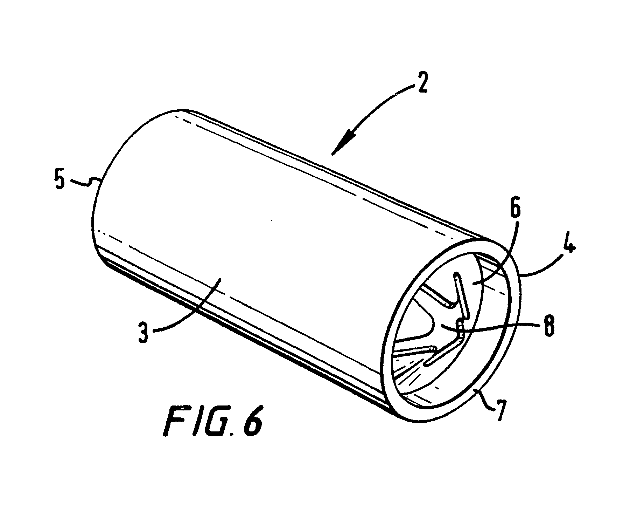

The dispensing system includes a dispenser 1, shown in figures 1 to 5, and a plurality of containers 2, shown in figures 4 to 6.

Each container 2 consists of a cylindrical tube 3 with first end 4 and second end 5.

A conical nozzle 6 partially closes the first end 4 of the cylindrical tube 3. The tube extends beyond the nozzle and has an end face 7 for engaging a support. The nozzle 6 includes a star-shaped aperture 8. This produces an attractive decorative pattern on the surface of the ice-cream as it is extruded through the nozzle 6, and allows the extruded ice-cream to flex so that it may be served easily in either dishes or comets.

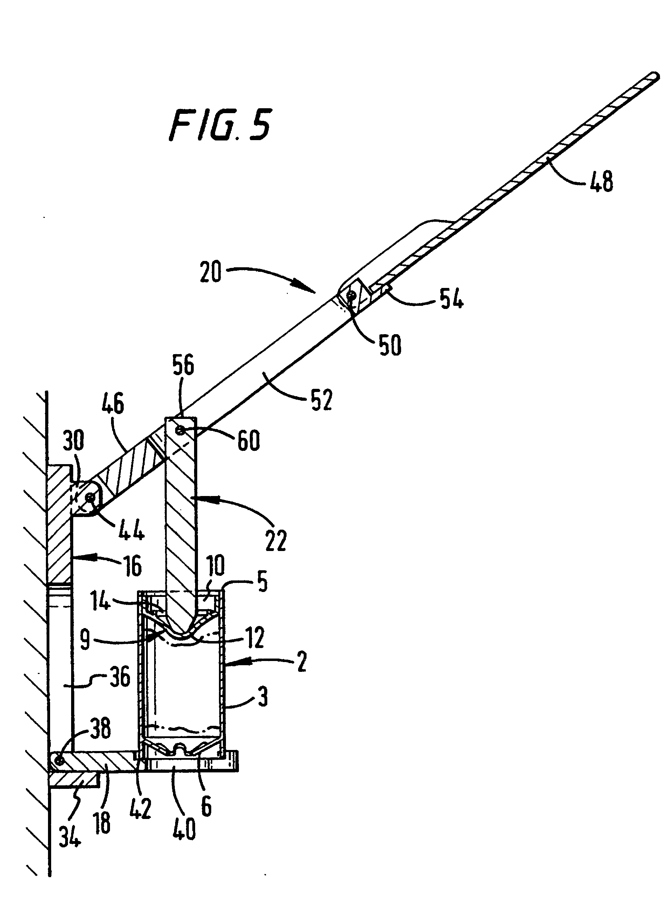

As shown in figure 5, a piston 9 is located within the main body of the tube 1, between the nozzle 6 and the second end 5. The piston has a cylindrical wall 10 and a front face 12 which is substantially conical in shape. The piston includes a ring 14 on the rear surface of the front face. To clean the tube thoroughly, a lip may be provided on the circumferential surface of the piston (not shown).

The conical nozzle and cylindrical tube are moulded as one part from a plastics material, for example a high density polyethylene or polypropylene. The piston is then placed in position within the tube such that the space between the piston and nozzle is the predetermined volume of a single portion of ice-cream, for example 125ml. The container is filled with ice-cream through the nozzle and then frozen. The ice-cream is of the normal "soft scoop" type. Once filled, the first end 2 of the container is sealed with a removable foil cover that adheres to the end face 5 of the tube, protecting the ice-cream from contamination. Alternatively, the first end 2 may be sealed with a removable cap.

The ice-cream is expelled from the container through the nozzle 6 by driving the piston 9 along the cylindrical tube towards the nozzle 6. The shape of the piston ensures that substantially all the ice-cream within the container is expelled. The container is rigid and does not collapse during the expulsion ofthe ice-cream. Because the tube is cylindrical, the force required to drive the piston is substantially uniform.

The dispenser 1 is shown in figures 1 to 5. Figures 1 to 3 show the dispenser in a folded configuration, figure 4 shows the dispenser being unfolded and figure 5 shows the dispenser ready for use, with a container of ice-cream in position for dispensing. The dispenser includes a back plate 16, a support plate 18, and a handle 20 and a plunger 22.

The back plate 16 has a lower portion 24 which is substantially rectangular in shape, joined to an upper neck portion 26, with rounded shoulders 28. Towards the top of the upper neck portion is a small connector piece 30 which extends forwards. There are two keyhole-shaped apertures 32 for suspension of the dispenser on suitably positioned screws, located near the top of the lower portion of the back plate. Extending forwards at the base of the back plate is a small shelf 34. The central portion of the shelf 34 is indented to accommodate the handle 20 when the dispenser 1 is in the folded configuration. An arch shaped aperture 36 is located within the lower portion ofthe back plate, such that the base of the aperture is in line with the top of the shelf 34.

The base of the support plate 18 is pivotably connected to the back plate 16 by means of a pivot pin 38, enabling the support plate 18 to fold downward when the dispenser is setup for use. The support plate is shaped such that in the folded configuration it fits within the arch-shaped aperture 36 in the back plate 16. The support plate includes an open circular aperture 40 at its free end. Around the edge of the aperture there is a C-shaped support surface 42.

When the support plate is folded downward it engages with the shelf 34. The shelf maintains the support plate in a horizontal position for engagement with the container. When in the position for use, the circular aperture 40 in the support plate is co-axial with the axis of the plunger 22. The C-shaped support surface engages the end face 7 of the container such that the container is supported in an upright position with the axis of the container substantially in line with the axis of the plunger.

The handle 20 is pivotably connected by means of a pivot pin 44 to the connector piece 30 located near the top of the back plate 16. In the folded configuration the handle lies flat against the middle of the back plate 16. The handle includes first and second sections 46 and 48. The first section 46 is pivotably connected at one end to the back plate by means of a pivot pin 44. The first and second sections 46, 48 are pivotably connected together by means of a second pivot pin 50, enabling the handle to be folded for storage and extended when the dispenser is unfolded for use. Within the first section 46 there is a long narrow substantially rectangular aperture 52, with rounded ends, which is positioned towards the second pivot pin 50. A lip 54 extends on the underside of the first section 46 at the end closest to the second pivot pin 50. The lip 54 serves as a stop surface to maintain the first and second sections in line when the handle is extended for use.

The plunger 22 is long, narrow and substantially rectangular in shape, with first and second ends, 56 and 58 respectively. The first end 56 of the plunger 22 is pivoted to the first section of the handle 46 near the top of the rectangular aperture 52 by means of a pivot pin 60. The second end 58 has a rounded surface for engagement with the piston 9 of the container 1. The plunger 22 is shorter and slightly narrower than the aperture 52, so that when the dispenser is in the folded configuration the plunger fits within aperture of the first section, lying flat against the back plate. When the dispenser is unfolded the plunger 22 is pivoted downward such that when the dispenser is in the position for use, the plunger is in a substantially vertical position.

The dispenser can be made of stainless steel, aluminium, a durable plastics material, or any other suitable material.

The method of using the dispensing system will now be described.

When an ice-cream is desired, the dispenser 1 which may for example be conveniently stored in a drawer, is mounted on a wall or suitable stand. The dispenser can be mounted on a wall either by means of suitably positioned screws or other suspension means. Alternatively, the dispenser may be permanently mounted on the wall so that it is in position for use whenever required.

The operator of the dispenser unfolds the dispenser by extending the handle 20, and folding the support plate 18 downwards so that it rests on the shelf 34 of the backing plate 16.

A container 2 of the desired flavour of ice-cream is chosen from the variety of flavours on offer in the freezer. The protective foil cover or cap is removed and the container is placed vertically in position on the support base of the dispenser. The operator lifts the handle up and pivots the plunger 22 downwards to engage the piston 9 of the container. The wafer cornet or bowl is held below the container. The operator pulls the handle 20 down, driving the plunger 22 down and thereby driving the piston 9 along the cylinder and forcing the ice-cream out of the nozzle 6. Expulsion of the ice-cream can be carefully controlled by adjusting the pressure exerted on the handle, enabling the desired presentation to be obtained.

When the operation is complete, the container 2 is removed and disposed of. The operation can be repeated as many times as necessary before the dispenser is neatly stowed away again until the next time.

As will be apparent, the dispenser is very simple to use. The dispenser is easy to operate manually since only a relatively small amount of force is required to dispense the ice-cream from the container. The design of the dispenser is such that it is small, compact, durable and easy to assemble and operate. The container is simply placed in the support base of the dispenser, the plunger brought into engagement with the piston of the container, and then the handle is pulled down. After dispensing the ice-cream, the container is easily removed and disposed of appropriately.

The container is a tube, resulting in efficient packing of the containers within a box, thereby taking up minimum space within a freezer. The aperture of the nozzle is large enough to enable ice-cream containing particulates to be dispensed just as easily as smooth ice-cream. Thus this dispensing system enables different types and flavours of ice-cream to be served attractively, quickly and easily. The system alsc reduces possible hygiene problems associated with the scoop method of supplying ice-cream since the ice-cream is sealed until required, and the dispenser does not come into contact with the ice-crearn.

Various modifications of the dispensing system are envisaged, for example the handle may be telescopically extendible, or a fixed length handle may be provided. The dispenser may also be manufactured from metal, for example aluminium or stainless steel, or from plastics materials, for example by injection moulding.

## Claims

1. A dispensing device (1) for dispensing frozen dessert from pre-filled containers (2) of frozen dessert, each said container (2) including a tubular housing (3) having a nozzle (6) at a first end thereof, the dispensing device (1) including a frame member (16), a support means (18) for supporting a pre-filled container in position for dispensing the frozen dessert, a plunger (22) for engaging a container supported on said support means, and a drive lever (20) for driving said plunger to dispense frozen dessert from the container, said plunger (22) being attached to said drive lever (20) by a first pivot means (60) and said drive lever (20) being attached to said frame member (16) by a second pivot means (44); **characterised in that** each said container (2) includes a piston (9) located for sliding movement within said tubular housing (3) to extrude frozen dessert within said container through the nozzle (6), and said support means (18) is attached to said frame member (16) by a third pivot means (38), the arrangement being such that the dispensing device may be unfolded for use or folded substantially flat for storage.

2. A dispensing device according to claim 1, wherein the support member (22) is arranged to fold into an aperture (36) in the frame member (16).

3. A dispensing device according to claim 1 or claim 2, wherein the support member includes an arcuate support surface (42) to engage the first end of the container (2).

4. A dispensing device according to any one of the preceding claims, wherein the drive lever (20) is arranged to fold substantially flat against the frame member (16).

5. A dispensing device according to any one of the preceding claims, wherein the plunger (22) is arranged to fold into an aperture (52) in the drive lever.

6. A dispensing device according to any one of the preceding claims, wherein the drive lever (20) has two parts (46,48) pivoted together, the arrangement being such that the drive lever may be unfolded for use or folded substantially flat for storage.

7. A dispensing device according to any one of the preceding claims, wherein the frame member (16) includes mounting means (32) for mounting the device to a support.

8. A dispensing device according to any one of the preceding claims and a container containing an individual portion of frozen dessert, wherein the individual portion of frozen dessert lies in the range 100ml-250ml, and preferably in the range 125ml-200mL

9. A dispensing device according to claim 8, wherein the container is sealed with a removable cover.

10. A dispensing device according to claim 8 or claim 9, wherein the container is substantially rigid.

11. A dispensing device according to claim 10, wherein the container is made of high density polyethylene or polypropylene.

12. A method of dispensing frozen dessert using a dispensing device according to any one of the preceding claims, the method including placing a container (2) of frozen dessert on said support means (18) and operating said drive lever (20) to actuate said plunger (22), thereby dispensing the frozen dessert through said nozzle (6) into a serving container; **characterised by** unfolding the dispensing device before use, and placing the plunger (22) in engagement with the piston (9) of the container, such that when actuated it drives said piston along the tube.

## Patentansprüche

1. Abgabevorrichtung (1) zur Abgabe einer gefrorenen Süßspeise aus vorgefüllten Behältern (2) mit gefrorener Süßspeise, jeder der Behälter (2) umfassend ein röhrenförmiges Gehäuse (3) mit einer Düse (6) an seinem ersten Ende, wobei die Abgabevorrichtung (1) ein Rahmenelement (16), ein Halteelement (18) zum Halten eines vorgefüllten Behälters in einer Position zur Abgabe der gefrorenen Süßspeise, einen Stempel (22) zum Angreifen an einen von dem Halteelement gehaltenen Behälter und einen Antriebshebel (20) zum Antreiben des Stempels umfaßt, um die gefrorene Süßspeise aus dem Behälter abzugeben, wobei der Stempel (22) über ein erstes Zapfenelement (60) an dem Antriebshebel (20) befestigt und der Antriebshebel (20) über ein zweites Zapfenelement (44) an dem Rahmenelement (16) befestigt ist, **dadurch gekennzeichnet, dass** jeder der Behälter (2) einen Kolben (9) für eine Gleitbewegung im röhrenförmigen Gehäuse (3) aufweist, um eine gefrorene Süßspeise im besagten Behälter durch die Düse (6) auszustoßen, und die Haltevorrichtung (18) über ein drittes Zapfenelement (38) an dem Rahmenelement (16) befestigt ist, wobei die Anordnung so ist, dass die Abgabevorrichtung zur Benutzung ausgeklappt oder zur Aufbewahrung weitgehend flach zusammengefaltet werden kann.

2. Abgabevorrichtung nach Anspruch 1, bei der das Halteelement (22) so angeordnet ist, daß es sich in eine Öffnung (36) im Rahmenelement (16) falten läßt.

3. Abgabevorrichtung nach Anspruch 1 oder 2, bei der das Halteelement eine bogenförmige Halterungsfläche (42) umfaßt, um am ersten Ende des Behälters anzugreifen.

4. Abgabevorrichtung nach einem der vorigen Ansprüche, bei der der Antriebshebel (20) so angeordnet ist, daß er weitgehend flach gegen das Rahmenelement (16) gefaltet werden kann.

5. Abgabevorrichtung nach einem der vorigen Ansprüche, bei der der Stempel (22) so angeordnet ist, daß er in eine Öffnung (52) des Antriebshebels gefaltet werden kann.

6. Abgabevorrichtung nach einem der vorigen Ansprüche, bei der der Antriebshebel (20) zwei drehbar miteinander verbundene Teile (46, 48) aufweist, wobei die Anordnung so ist, daß der Antriebshebel zur Benutzung ausgeklappt und zur Aufbewahrung weitgehend flach zusammengefaltet werden kann.

7. Abgabevorrichtung nach einem der vorigen Ansprüche, bei der das Rahmenelement (16) Befestigungselemente (32) zum Befestigen der Vorrichtung auf einem Träger umfaßt.

8. Abgabevorrichtung nach einem der vorigen Ansprüche und Behälter beinhaltend eine Einzelmenge einer gefrorenen Süßspeise, bei der die Einzelmenge der Süßspeise im Bereich von 100 ml - 250 ml und bevorzugt im Bereich von 125 ml - 200 ml liegt.

9. Abgabevorrichtung nach Anspruch 8, bei der der Behälter mit einer entfernbaren Abdeckung verschlossen ist.

10. Abgabevorrichtung nach Anspruch 8 oder 9, bei der der Behälter im wesentlichen fest ist.

11. Abgabevorrichtung nach Anspruch 10, bei der der Behälter aus Polyethylen oder Polypropylen hoher Dichte besteht.

12. Verfahren zur Abgabe einer gefrorenen Süßspeise unter Verwendung einer Abgabevorrichtung nach einem der vorigen Ansprüche, umfassend das Anordnen eines Behälters (2) mit einer gefrorenen Süßspeise auf das Haltemittel (18) und Betätigen des Antriebshebels (20) zum Antreiben des Stempels (22), dabei Herausgeben der gefrorenen Süßspeise durch die Düse (6) in einen Auffangbehälter, **gekennzeichnet durch** das Aufklappen der Abgabevorrichtung vor der Benutzung und Angreifen des Stempels (22) an dem Kolben (9) des Behälters, so daß dieser im angetriebenen Zustand den Kolben entlang des Rohres bewegt.

## Revendications

1. Dispositif de distribution (1) permettant de distribuer un dessert glacé à partir de récipients pré-remplis (2) de dessert glacé, chacun desdits récipients (2) incluant un boîtier tubulaire (3) présentant une buse (6) au niveau de sa première extrémité, le dispositif de distribution (1) incluant un élément de cadre (16), un moyen de support (18) destiné à supporter un récipient pré-rempli dans la position permettant de distribuer le dessert glacé, un poussoir (22) destiné à coopérer avec un récipient supporté sur ledit moyen de support, et un levier d'entraînement (20) permettant d'entraîner ledit poussoir pour qu'il distribue le dessert glacé depuis le récipient, ledit poussoir (22) étant fixé audit levier d'entraînement (20) par un premier moyen de pivot (60) et ledit levier d'entraînement (20) étant fixé audit élément de cadre (16) par un deuxième moyen de pivot (44), **caractérisé en ce que** chaque dit récipient (2) inclut un piston (9) situé de manière à effectuer un mouvement coulissant à l'intérieur dudit boîtier tubulaire (3) pour extruder le dessert glacé à l'intérieur dudit récipient au travers de la buse (6), et ledit moyen de support (18) est fixé audit élément de cadre (16) par un troisième moyen de pivot (38), l'agencement étant tel que le dispositif de distribution peut être déplié pour être utilisé ou plié de manière à être sensiblement plat pour être stocké.

2. Dispositif de distribution selon la revendication 1, dans lequel l'élément de support (22) est agencé de manière à se plier dans une ouverture (36) dans l'élément de cadre (16).

3. Dispositif de distribution selon la revendication 1 ou 2, dans lequel l'élément de support inclut une surface de support recourbée (42) prévue pour venir en prise avec la première extrémité du récipient (2).

4. Dispositif de distribution selon l'une quelconque des revendications précédentes, dans lequel le levier d'entraînement (20) est agencé pour se plier en étant sensiblement plat contre l'élément de cadre (16).

5. Dispositif de distribution selon l'une quelconque des revendications précédentes, dans lequel le poussoir (22) est agencé pour se plier dans une ouverture (52) dans le levier d'entraînement.

6. Dispositif de distribution selon l'une quelconque des revendications précédentes, dans lequel le levier d'entraînement (20) présente deux parties (46, 48) montées pivotantes l'une avec l'autre, l'agencement étant tel que le levier d'entraînement peut être déplié pour être utilisé ou plié de manière à être sensiblement plat pour être stocké.

7. Dispositif de distribution selon l'une quelconque des revendications précédentes, dans lequel l'élément de cadre (16) inclut un moyen de montage (32) permettant de monter le dispositif sur un support.

8. Dispositif de distribution selon l'une quelconque des revendications précédentes et récipient contenant une portion individuelle de dessert glacé, dans lequel la portion individuelle de dessert glacé se trouve dans la plage de 100 à 250 ml, et de préférence dans la plage de 125 à 200 ml.

9. Dispositif de distribution selon la revendication 8, dans lequel le récipient est fermé de façon étanche par un couvercle amovible.

10. Dispositif de distribution selon la revendication 8 ou 9, dans lequel le récipient est sensiblement rigide.

11. Dispositif de distribution selon la revendication 10, dans lequel le récipient est constitué de polyéthylène ou polypropylène haute densité.

12. Procédé de distribution de dessert glacé utilisant un dispositif de distribution selon l'une quelconque des revendications précédentes, le procédé incluant les étapes consistant à placer un récipient (2) de dessert glacé sur ledit moyen de support (18) et à actionner ledit levier d'entraînement (20) pour entraîner ledit poussoir (22), en distribuant ainsi le dessert glacé par l'intermédiaire de ladite buse (6) dans un récipient où le dessert va être servi, **caractérisé en ce qu'**on déplie le dispositif de distribution avant l'utilisation et **en ce qu'**on met le poussoir (22) en prise avec le piston (9) du récipient, de telle sorte que, lorsqu'il est actionné, il entraîne ledit piston le long du tube.
